# EUROPEAN PATENT APPLICATION

(11) **EP 4 797 256 A1**
(43) Date of publication of application: **26.08.2026**
(21) Application number: 26151912.8
(22) Date of filing: 14.01.2026
(51) Int. Cl.: G10L 15/26, G10L 13/033

(54) **METHOD, APPARATUS, DEVICE, AND MEDIUM FOR TRANSLATING SPEECH DATA**

(30) Priority: 21.02.2025 CN 202510202592
(71) Applicant: Bytedance Technology Ltd., KY1 - 1205 Grand Cayman Cayman Islands (KY); BEIJING YOUZHUJU NETWORK TECHNOLOGY CO. LTD., Beijing 101299 (CN)
(72) Inventor: Zhang, Qini, 018960 Singapore (SG); Huang, Zhichao, Hong Kong (HK); Cheng, Shanbo, 018960 Singapore (SG)
(74) Representative: Marks & Clerk LLP

(57) **Abstract**

Methods, apparatuses, devices and media for translating speech data are provided. In a method, source speech data represented in a source language is received, the source speech data including a first speech segment having a first timbre and a second speech segment having a second timbre. A speech translation corresponding to the source speech data is determined using a machine learning model, the speech translation being represented in a destination language and including a first speech translation corresponding to the first speech segment and a second speech translation corresponding to the second speech segment. The first speech translation has the first timbre, and the second speech translation has the second timbre. With the implementations of the present disclosure, different speech segments with different timbres represented in the source language may be accurately distinguished, and speech translations with different timbres represented in the destination language may be generated respectively.

## Description

### TECHNICAL FIELD

Implementations of the present disclosure generally relate to natural language translation, and in particular, to a method, an apparatus, a device, and a computer-readable storage medium for translating speech data from a source language into a destination language.

### BACKGROUND

Machine learning technologies have been widely used in natural language translation, and currently machine learning models dedicated to simultaneous translation have been developed. In the process of simultaneous translation, input data is received in a streaming manner, and the machine learning model gradually outputs translation results corresponding to newly received parts. A simultaneous translation scenario may involve a conversation among multiple users, but existing translation models generally only support translation in a single timbre and cannot distinguish different timbres of the multiple users. In this case, it is desired to provide speech translation supporting multiple timbres while ensuring low latency and high accuracy of simultaneous translation.

### SUMMARY

In a first aspect of the present disclosure, a method of translating speech data is provided. In the method, source speech data represented in a source language is received, the source speech data including a first speech segment having a first timbre and a second speech segment having a second timbre. A speech translation corresponding to the source speech data is determined using a machine learning model, the speech translation being represented in a destination language and including a first speech translation corresponding to the first speech segment and a second speech translation corresponding to the second speech segment, the first speech translation having the first timbre, and the second speech translation having the second timbre.

In a second aspect of the present disclosure, an apparatus for translating speech data is provided. The apparatus includes a receiving module configured to receive source speech data represented in a source language, the source speech data including a first speech segment having a first timbre and a second speech segment having a second timbre; and a determining module configured to determine a speech translation corresponding to the source speech data using a machine learning model, the speech translation being represented in a destination language and including a first speech translation corresponding to the first speech segment and a second speech translation corresponding to the second speech segment, the first speech translation having the first timbre, and the second speech translation having the second timbre.

In a third aspect of the present disclosure, an electronic device is provided. The electronic device includes at least one processor; and at least one memory coupled to the at least one processor and storing instructions executable by the at least one processor, the instructions, when executed by the at least one processor, causing the electronic device to perform the method of the first aspect.

In a fourth aspect of the present disclosure, a computer-readable storage medium is provided. The computer-readable storage medium stores a computer program which, when executed by a processor, causes the processor to perform the method of the first aspect.

In a fifth aspect of the present disclosure, a computer program product is provided. The computer program product includes a computer program which, when executed by a processor, implements the method of the first aspect.

It would be appreciated that the content described in the Summary section of the present disclosure is neither intended to identify key or essential features of the implementations of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the implementations of the present disclosure will become more apparent in the following, in conjunction with the drawings and with reference to the following detailed description. In the drawings, the same or similar reference symbols refer to the same or similar elements, where:
Fig. 1 illustrates a block diagram of an application environment according to an implementation of the present disclosure;
Fig. 2 illustrates a block diagram of translating speech data according to some implementations of the present disclosure;
Fig. 3 illustrates a block diagram of determining a speech translation based on preceding data according to some implementations of the present disclosure;
Fig. 4 illustrates a block diagram of a prompt for invoking a language model according to some implementations of the present disclosure;
Fig. 5 illustrates a block diagram of translating speech data using a machine learning model according to some implementations of the present disclosure;
Fig. 6 illustrates a block diagram of a reference sample for training the machine learning model according to some implementations of the present disclosure;
Fig. 7 illustrates a flowchart of a method of translating speech data according to some implementations of the present disclosure;
Fig. 8 illustrates a block diagram of an apparatus for translating speech data according to some implementations of the present disclosure; and
Fig. 9 illustrates a block diagram of a device in which multiple implementations of the present disclosure may be implemented.

### DETAILED DESCRIPTION OF EMBODIMENTS

The implementations of the present disclosure will be described in more detail below with reference to the drawings. Although certain implementations of the present disclosure are shown in the drawings, it would be appreciated that the present disclosure may be implemented in various forms and should not be construed as limited to the implementations set forth herein. Instead, these implementations are provided for a more thorough and complete understanding of the present disclosure. It would be appreciated that the drawings and implementations of the present disclosure are only for illustrative purposes and are not intended to limit the protection scope of the present disclosure.

In the description of the implementations of the present disclosure, the term "include/comprise" and similar terms should be understood as open-ended inclusions, that is, "include/comprise but not limited to". The term "based on" should be understood as "based at least in part on". The term "an implementation" or "the implementation" should be understood as "at least one implementation". The term "some implementations" should be understood as "at least some implementations". Other definitions, either explicit or implicit, may be included below. As used herein, the term "model" may represent an association between various data. For example, the above association may be obtained based on various technical solutions that are currently known and/or will be developed in the future.

It would be understood that the data involved in the technical solution (including but not limited to the data itself, acquisition or use of the data) should comply with requirements of corresponding laws, regulations, and related provisions.

It would be understood that before the use of the technical solution disclosed in the embodiments of the present disclosure, the user should be informed of the type, range of use, use scenarios, etc., of personal information involved in the present disclosure and the authorization of the user should be obtained in an appropriate manner in accordance with relevant laws and regulations.

For example, in response to reception of an active request from a user, prompt information is sent to the user to clearly inform the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solution of the present disclosure.

As an optional but non-limiting implementation, in response to the reception of the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It would be appreciated that the above process of notifying the user and acquiring the authorization of the user is only illustrative and does not constitute a limitation on the implementations of the present disclosure, and other manners that satisfy the relevant laws and regulations may also be applied in the implementations of the present disclosure.

The term "in response to" used herein represents a state in which a corresponding event occurs or a condition is satisfied. It would be appreciated that there is not necessarily a strong correlation between a time when a subsequent action performed in response to the event or condition is executed and a time when the event occurs or the condition is satisfied. For example, in some cases, the subsequent action may be executed immediately when the event occurs or the condition is satisfied, while in other cases, the subsequent action may be executed after a period of time has elapsed since the event occurred or the condition was satisfied.

### Example Environment

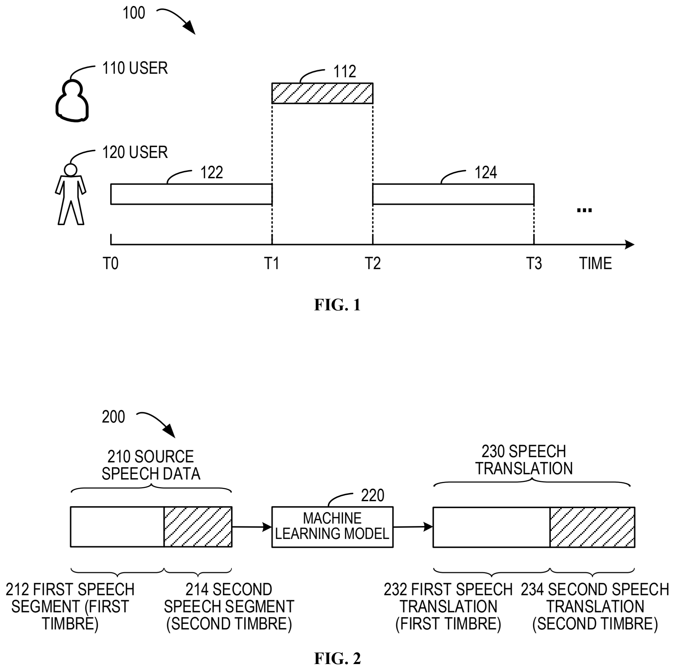

Currently, machine learning models dedicated to simultaneous translation have been developed. In the process of simultaneous translation, input data is received in a streaming manner, and the machine learning model gradually outputs translation results corresponding to newly received parts. An environment for simultaneous translation is described with reference to Fig. 1, which illustrates a block diagram 100 of an application environment according to an implementation of the present disclosure. As shown in Fig. 1, a simultaneous translation scenario may involve a conversation among multiple users. A user 110 and a user 120 may provide speech data represented in a source language and expect to translate the speech data into a speech translation result represented in a destination language. For the sake of discussion, in the context of the present disclosure, the translation process is described using an example in which the source language is Chinese and the destination language is English. Alternatively and/or in addition, the source language and the destination language may include other natural languages.

As shown in Fig. 1, between time points T0 and T1, the user 120 may provide speech data 122; between time points T1 and T2, the user 110 may provide speech data 112; and between time points T2 and T3, the user 120 may provide speech data 124. At this time, the collected speech data includes interleaved speech segments from multiple people. A translation model may be used to translate the speech data represented in Chinese into a speech translation result represented in English. However, existing translation models generally only support translation from speech to text or translation in a single timbre (for example, a machine-synthesized timbre) and cannot distinguish different timbres of multiple users. In this case, it is desired to provide speech translation supporting multiple timbres while ensuring low latency and high accuracy of simultaneous translation.

### Overview of Speech Translation

In order to at least partially address the deficiencies in the prior art, according to an implementation of the present disclosure, a method of translating speech data is proposed. An overview of an implementation of the present disclosure is described with reference to Fig. 2, which illustrates a block diagram 200 of translating speech data according to some implementations of the present disclosure. As shown in Fig. 2, a method of translating speech data is provided. Specifically, source speech data 210 represented in a source language may be received, the source speech data 210 including a first speech segment 212 having a first timbre and a second speech segment 214 having a second timbre.

Then, a speech translation 230 corresponding to the source speech data 210 may be determined using a machine learning model 220, the speech translation 230 being represented in a destination language. The speech translation 230 is represented in an audio format and includes a first speech translation 232 corresponding to the first speech segment 212 and a second speech translation 234 corresponding to the second speech segment 214. Here, the first speech translation 232 has the first timbre, and the second speech translation 234 has the second timbre.

For the sake of discussion, the speech translation process is described using a conference only as an example. The conference may involve a first user Alice and a second user Bob, who talk in Chinese and expect to translate the content of the Chinese talk into English. Specifically, the first speech segment 212 is from the first user Alice with a sweet timbre, and the second speech segment is from the second user Bob with a deep timbre. At this time, the generated first speech translation may have a sweet timbre, and the second speech translation may have a deep timbre.

With the implementations of the present disclosure, different speech segments with different timbres represented in the source language may be accurately distinguished, and speech translations with different timbres represented in the destination language may be generated respectively. In this way, the listener may distinguish speakers corresponding to different speech translations in a clearer manner, thereby improving the efficiency of language communication.

### Detailed Process of Speech Translation

The overview of some implementations of the present disclosure has been described. In the following, more information on the speech translation will be provided. According to some implementations of the present disclosure, historical data preceding the source speech data may be used as contextual data for the machine learning model. Specifically, the source speech data is part of a source speech data sequence, in which case the historical data may be extracted from the source speech sequence. Specifically, in the process of determining the speech translation corresponding to the source speech data, preceding text data corresponding to preceding speech data in the source speech data sequence may be determined, the preceding speech data preceding the source speech data; a preceding text translation corresponding to the preceding text data may be obtained; and the speech translation corresponding to the source speech data may be determined using the machine learning model based on the preceding text data and the preceding text translation. With some implementations of the present disclosure, simultaneous translation may be provided in the context of a multi-party conversation, thereby improving the accuracy of machine translation.

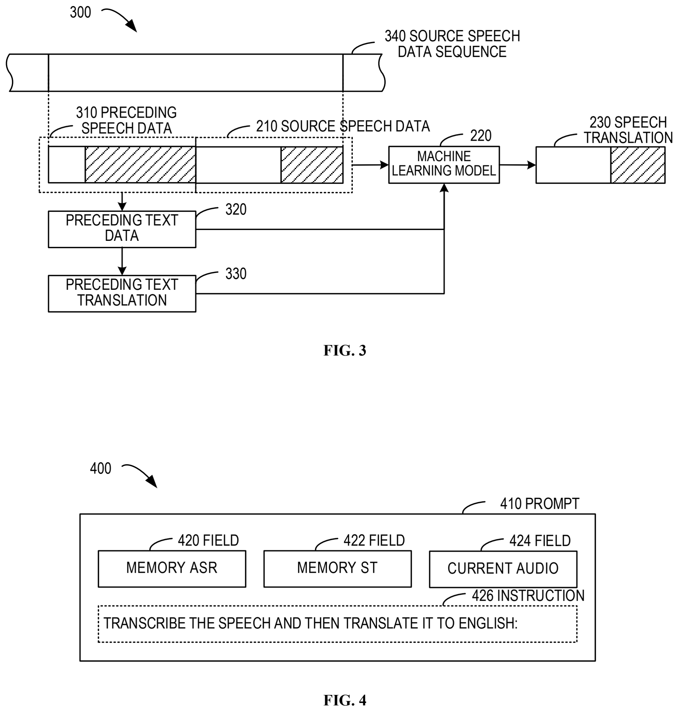

More details of the translation process are described with reference to Fig. 3, which illustrates a block diagram 300 of determining a speech translation based on preceding data according to some implementations of the present disclosure. As shown in Fig. 3, the source speech data sequence 340 may be of a long duration, for example, speech data collected in real time during a conference. The source speech data 210 to be translated and the preceding speech data 310 preceding the source speech data 210 may be extracted from the source speech data sequence 340. The preceding speech data 310 may be used as contextual data of the translation process and input to the machine learning model 220 to determine the speech translation 230 for the source speech data 210. In this way, a more accurate speech translation 230 may be obtained subject to the constraint of the preceding speech data 310.

According to some implementations of the present disclosure, in the process of determining the speech translation corresponding to the source speech data based on the preceding text data and the preceding text translation, the machine learning model may be used to determine a first text translation corresponding to the first speech segment and a second text translation corresponding to the second speech segment respectively based on the preceding text data and the preceding text translation. Furthermore, the machine learning model may be used to determine a first speech translation corresponding to the first text translation and a second speech translation corresponding to the second text translation, respectively. Then, the first speech translation and the second speech translation are combined using the machine learning model to determine the speech translation. In the context of the present disclosure, the text translation is represented in a text format, and the speech translation is represented in an audio format.

It would be appreciated that the machine learning model here may be an end-to-end machine learning model with multiple capabilities, and the model may include multiple network modules to perform respective functions separately. For example, the machine learning model may include a translation module configured to determine a first text translation corresponding to the first speech segment and a second text translation corresponding to the second speech segment respectively based on the preceding text data and the preceding text translation; and a speech generation module configured to determine a first speech translation corresponding to the first text translation and a second speech translation corresponding to the second text translation, respectively, and combine the first speech translation and the second speech translation to determine the speech translation.

According to some implementations of the present disclosure, the translation module here may be implemented based on a language model. Specifically, in the process of determining the first text translation and the second text translation respectively based on the preceding text data and the preceding text translation, the machine learning model may be used to determine a text translation corresponding to the source speech data. Here, the text translation may include a switching token represented in a text format, the switching token corresponding to a switching point between the first speech segment and the second speech segment. With continued reference to Fig. 3, the preceding text data 320 corresponding to the preceding speech data 310 may be determined. Here, the preceding text data 320 may be determined based on an automatic speech recognition (abbreviated as ASR) model, and the preceding text translation 330 may be determined in a previous translation step.

According to some implementations of the present disclosure, the translation method of the present disclosure may be performed iteratively. For example, in step 1, the preceding speech data 310, the preceding text data 320, and the preceding text translation 330 are all empty. At this time, although the contextual data is empty, the machine learning model 220 may still provide a text translation corresponding to the source speech data. In step 2, the source speech data in step 1 may be used as the preceding speech data 310, the preceding text data 320 may be determined by the ASR model, and the preceding text translation 330 may be determined using the translation module in the machine learning model. At this time, the contextual data is not empty, so that the translation module may determine a text translation and a speech translation corresponding to the source speech data in the current step in the context specified by the contextual data. In subsequent steps, operations may be performed in a similar manner until the source speech data sequence 340 no longer includes more untranslated content.

According to some implementations of the present disclosure, the source speech data may be received in a streaming manner. In this case, the source speech data sequence may be an audio stream received in real time. In this way, newly received content may be processed in real time to provide accurate translation results. Specifically, in a simultaneous translation scenario, a speaker may keep speaking, and a data segment may be determined in a predetermined manner. In a plurality of steps, a newly received data segment may be continuously detected, and the newly received data segment may be processed using the process described above. In this way, translation services may be provided in real time in an accurate and efficient manner.

According to some implementations of the present disclosure, as time goes by, the source speech data may span a relatively long period of time. In this case, the source speech data sequence may be divided into speech data blocks having a predetermined duration to ensure that the to-be-translated data amount that is processed in one translation step does not become excessive. For example, the predetermined duration may be set to 20 seconds, 30 seconds (or another duration). Specifically, in the process of receiving the source speech data, a speech data block may be determined from the source speech data sequence according to the predetermined duration, and the source speech data may be further determined from the speech data block. Here, newly received speech data may be used as the source speech data. Alternatively and/or in addition, a maximum duration of the source speech data may be set. In this way, the translation process may be performed in real time, thereby achieving the purpose of simultaneous translation.

According to some implementations of the present disclosure, the preceding speech data and the source speech data may be located in the same speech data block. In other words, within the speech data block, the part preceding the source speech data may be used as the preceding speech data. With some implementations of the present disclosure, the contextual data may be limited to a finite range. In this way, on the one hand, the historical data obtained recently may be used as the contextual data as much as possible, thereby avoiding interference of early historical data on the translation process. On the other hand, it may avoid a situation in which the workload of the machine learning model is too high and the delay is too long due to overly long contextual data. In this way, the translation performance of the machine learning model may be further improved.

According to some implementations of the present disclosure, the text translation may be divided into the first text translation and the second text translation based on the switching token in the text translation. It would be appreciated that the switching token here may correspond to a switching point between the first reference speech segment and the second reference speech segment. That is, a switching point between the first timbre and the second timbre. Assuming that the first reference speech segment in the source speech data is between time points T0 and T1 and the second speech segment is between time points T1 and T2, the switching token may correspond to T1. The switching token may be represented in a text format, for example, the switching token may be represented using the format <spk-chg><time-xx>, where <spk-chg> represents a keyword of the switching token, and <time-xx> represents a position of the switching point in the source speech data. For example, <spk-chg><time-T1> may represent that the switching point between the first reference speech segment and the second reference speech segment is located at the time point T1 in the source speech data. It would be appreciated that the switching token described above is only illustrative, and alternatively and/or in addition, the switching token may be represented in other formats. For example, different keywords and time formats may be set, and another example of the switching token may be represented as <switch_point><time:xx>.

After the first text translation and the second text translation have been obtained from the translation module, the speech generation module in the machine learning model may be used to determine the first speech translation corresponding to the first text translation and the second speech translation corresponding to the second text translation, respectively. Then, the speech generation module may combine the first speech translation and the second speech translation to determine the speech translation. Here, the speech module is implemented based on a text-to-speech machine learning model, and the timbre of the speech translation to be generated may be specified. For example, it may be specified that the first speech translation has the first timbre and the second speech translation has the second timbre.

According to some implementations of the present disclosure, the translation process may be performed based on a language model, for example, a prompt may be input to the machine learning model, and a response of the machine learning model to the prompt may be received. More details on the prompt are described with reference to Fig. 4, which illustrates a block diagram 400 of a prompt for invoking a language model according to some implementations of the present disclosure. As shown in Fig. 4, the prompt 410 may include a plurality of parts. For example, the field 420 may be in a text format for specifying the preceding text data 320 of the preceding speech data 310 that is stored. The field 422 may be in a text format for specifying the preceding text translation 330 of the preceding text data 320. The field 424 may be in an audio format for specifying the source speech data 210 to be translated. The instruction 426 may specify a task performed by the machine learning model, for example, extracting a transcription text from the speech and translating it into English.

Alternatively and/or in addition, the instruction 426 may further specify the format of the output translation: [Current ASR] <seperator> [Current ST] <end_time_token>. Here, "[Current ASR]" represents the to-be-translated text extracted from the to-be-translated source speech data 210, "<seperator>" represents a separator (e.g., colon ":", equal sign "=", or another separator), "[Current ST]" represents an English translation text corresponding to the text to be translated, and "<end_time_token>" represents the end time of the source speech data 210. It would be appreciated that although the prompt described above is written in the English language, alternatively and/or in addition, based on the processing capability of the machine learning model, the prompt may be written in other languages. For example, the instruction 426 in the prompt may include "extract a transcription text from the speech and translate it into English".

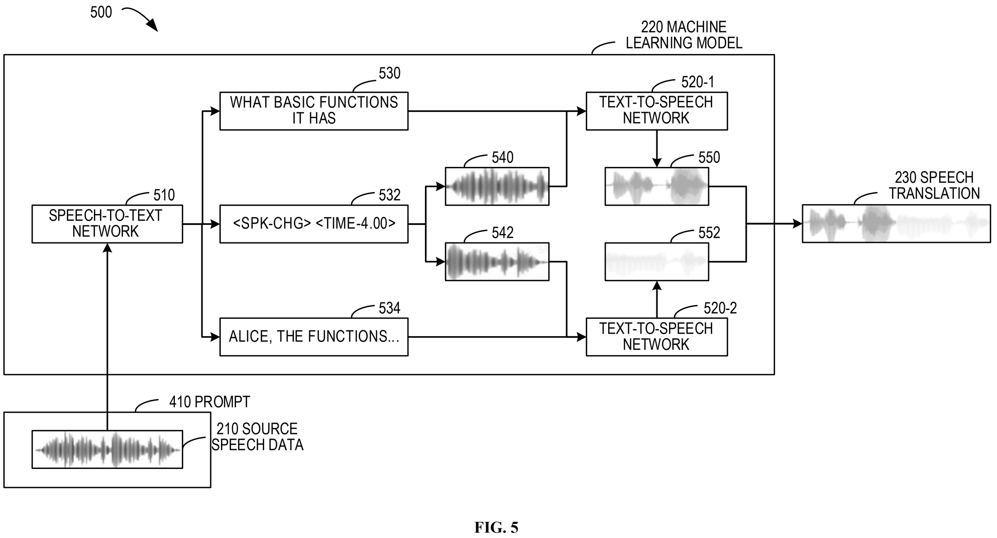

In the following, more details in the overall translation process are described with reference to Fig. 5, which illustrates a block diagram 500 of translating speech data using a machine learning model according to some implementations of the present disclosure. As shown in Fig. 5, the prompt 410 may be input to the machine learning model 220. The preceding text data 320 may be filled in the field 420 in the prompt 410, the preceding text translation 330 may be filled in the field 422, and the source speech data 210 may be filled in the field 424. Here, the source speech data 210 is audio data represented in Chinese, and the corresponding Chinese text is " 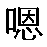 , 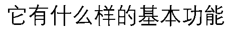 (En, what basic function it has)".

The speech-to-text network 510 (corresponding to the translation module) in the machine learning model 220 may receive the prompt and output a text translation. The text translation may be represented as a text string, for example, "what basic function it has. <spk-chg><time-4.00> Alice, the function". The text translation may include a plurality of parts: a first text translation 530, a switching token 532, and a second text translation 534. At this time, the switching token 532 may represent a switching point between the two text translations. It would be appreciated that the speech-to-text network 510 here is trained using a reference sample with a switching token, and therefore the switching token is output in the text translation when a timbre switch in the source speech data 210 is detected. Table 1 shows specific data of each field, the first speech segment is from the start time point 0.00 to the time point 4.00, and the second speech segment is from the time point 4.00 to the end time point 6.00.

**Table 1 Data in the fields**

| Field Name | Data |
|---|---|
| Memory ASR | 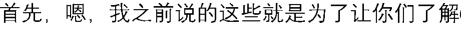 (First, well, what I said before is to let |
| | you understand) |
| Memory ST | First, what I said before was to help you understand |
| Current ASR | 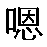 , 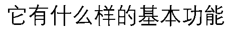 (En, what basic function it has). <spk-chg><time-4.00> Alice, 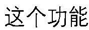 (Alice, the function) |
| Current ST | En, what basic function it has. <spk-chg><time-4.00> Alice, the function |
| end_time_token | <time-6.00> |

Furthermore, a text-to-speech network 520-1 (corresponding to the speech generation module) in the machine learning model 220 may be used to generate the first speech translation 550 corresponding to the first text translation 530 and having the first timbre of the first speech segment 540. The text-to-speech network 520-2 may be used to generate the second speech translation 552 corresponding to the second text translation 534 and having the second timbre of the second speech segment 542. Then, the first speech translation 550 and the second speech translation 552 may be combined to generate the speech translation 230.

It would be appreciated that although Fig. 5 describes the translation process using the source speech data 210 with speech switching as an example, alternatively and/or in addition, the machine learning model of the present disclosure may process source speech data without speech switching. At this time, if the model detects that there is no timbre switch in the source speech data, no switching token is output in the text translation. In this way, a unified machine learning model may be used to perform the translation process, thereby simplifying the management complexity of the translation process.

According to some implementations of the present disclosure, the translation process may be performed using an end-to-end machine learning model. Compared with existing technical solutions that perform speech translation in a cascaded manner, data communication between individual network modules in the end-to-end machine learning model is performed in the feature space and does not need to be converted into an explicit format recognizable by humans, so that transmission delay may be reduced and translation efficiency may be improved. Furthermore, a loss function may be determined and the individual network modules in the machine learning model may be trained in an integrated manner, thereby improving the accuracy of the machine learning model as a whole. In this way, the end-to-end machine learning model may have lower latency and higher accuracy.

It would be appreciated that the machine learning model 220 here may be a pre-trained model. A reference sample may be collected and the machine learning model may be trained. According to some implementations of the present disclosure, any suitable translation model may be used as the base model of the translation module in the machine learning model 220. Here, the translation module may translate the source speech data represented in the source language into a text translation represented in the destination language. Different from a conventional speech-to-text translation model, the text translation here may include a plurality of text translations corresponding to a plurality of speech segments in the source speech data respectively and a switching token corresponding to a switching point between the plurality of speech segments.

In other words, the translation module may be trained to perform a plurality of functions: translating speech data represented in the source language into text data represented in the destination language, and identifying a switching point between different speech segments with different timbres in the speech data. With some implementations of the present disclosure, the machine learning model may be enabled to provide richer functions, thereby providing an accurate timbre switching point for the subsequent process of generating the speech translation.

According to some implementations of the present disclosure, the translation model is determined based on: obtaining reference preceding text data represented in the source language and a reference preceding text translation, the reference preceding text data being represented in the source language, and the reference preceding text translation being represented in the destination language; obtaining reference source speech data represented in the source language, the reference source speech data including a first reference speech segment having the first timbre and a second reference speech segment having the second timbre; obtaining a first reference text translation corresponding to the first reference speech segment and a second reference text translation corresponding to the second reference speech segment; and updating the translation model based on the reference preceding text data, the reference preceding text translation, the reference source speech data, the first reference text translation, and the second reference text translation.

In the context of the present disclosure, the reference preceding speech data and the reference source speech data are represented in the source language and are successive audio data extracted from a known speech data stream. Here, the reference sample may be represented as: "[Memory ASR] [Memory ST] [Current Audio] Transcribe the speech and then translate it to Chinese: [Current ASR] <seperator> [Current ST] <end _time _token>".

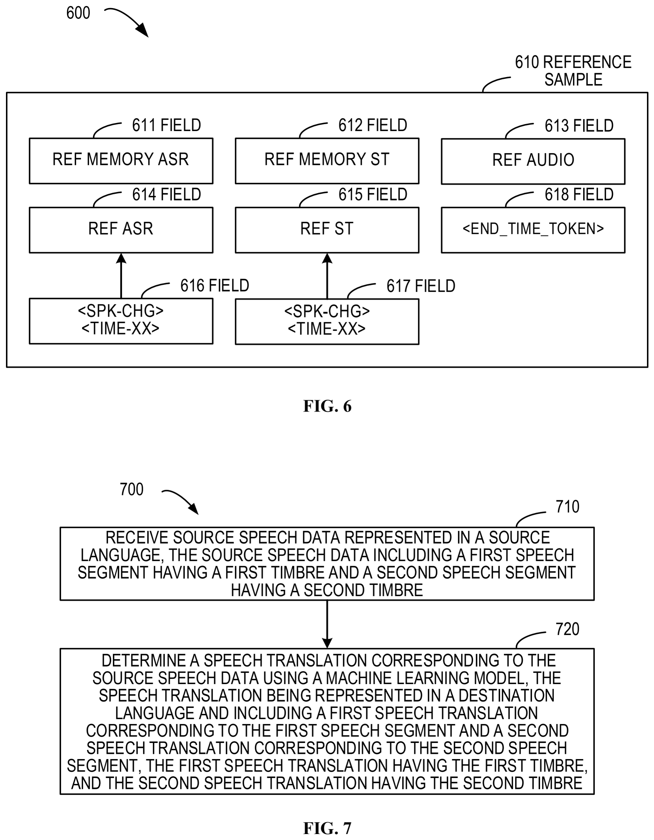

More details on the reference sample are described with reference to Fig. 6, which illustrates a block diagram 600 of a reference sample for training a machine learning model according to some implementations of the present disclosure. As shown in Fig. 6, a reference sample 610 may be constructed using a public translation dataset. The process of training the machine learning model is described using Chinese-to-English translation only as an example. The reference sample 610 may include a plurality of fields: a field 611 corresponding to the reference preceding text data represented in the source language, a field 612 corresponding to the reference preceding text translation represented in the destination language (i.e., an English translation of the reference preceding text data), a field 613 corresponding to the reference source speech data in a speech format represented in the source language, a field 614 corresponding to the reference text data (i.e., a text recognized from the reference source speech data), a field 615 corresponding to the reference text translation represented in the destination language (i.e., an English translation of the reference text data), and a field 618 corresponding to an end token.

According to some implementations of the present disclosure, the first reference text translation includes a reference switching token corresponding to the switching point between the first reference speech segment and the second reference speech segment. At this time, the end of the field 614 includes a field 616, which corresponds to the switching point in the reference text data; and the end of the field 615 includes a field 617, which corresponds to the switching point in the reference text data. In this way, the translation module may accurately learn the relevant knowledge about identifying the speech switching point. Table 2 below shows an example of each field in the reference sample.

**Table 2 Example of the reference sample**

| Field Name | Data |
|---|---|
| Ref Memory ASR | 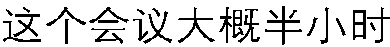 (This meeting will take about half an hour) |
| Ref Memory ST | This meeting will take about half an hour |
| Ref Audio | Speech data, corresponding to the Chinese text " 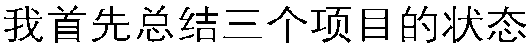 _{∘} Bob, 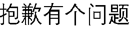 (I'll first summarize the status of the three projects. Bob, sorry I have a question)". In the speech data, the speech segment corresponding to " 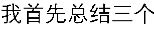 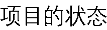 (I'll first summarize the status of the three projects)" has a first timbre, and the speech segment corresponding to "Bob, 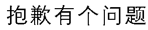 (Bob, sorry I have a question)" has a second timbre. |
| Ref ASR | 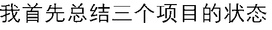 (I'll first summarize the status of the three projects). <spk-chg><time-3.00> Bob, 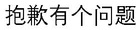 (Bob, sorry I have a question). |
| Ref ST | I will first summarize the state of the three projects <spk-chg><time-3.00>Bob, sorry to ask a question. |
| end_time_token | <time-5.00> |

In the above reference sample, the speech segment corresponding to " 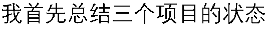 (I'll first summarize the status of the three projects)" has the first timbre and a time range of 0.00 to 3.00 seconds; and the speech segment corresponding to" Bob, 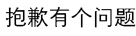 (Bob, sorry I have a question)" has the second timbre and a time range of 3.00 to 5.00 seconds.

According to some implementations of the present disclosure, the reference sample 610 may be used to update the translation module. At this time, the fields 611, 612, and 613 correspond to the data part in the reference sample, and the fields 614 and 615 correspond to the label part in the reference sample. Specifically, the fields 611, 612, and 613 may be input into the translation module to be updated, and the predictions of the fields 614 and 615 from the translation module may be received. Furthermore, the parameters of the translation module may be updated based on the differences between the fields 614 and 615 and their respective predictions. For example, the parameters of the translation module may be updated in a direction that minimizes the differences. According to some implementations of the present disclosure, the translation module may be updated iteratively using a large number of reference samples to obtain a translation module that may provide translation and identify timbre switching points.

According to some implementations of the present disclosure, the speech module may be implemented using a text-to-speech (TTS) network. For example, a text-to-speech model with timbre cloning function may be used to construct the speech module. The timbre of the original audio may be combined with the text in the destination language to generate an audio corresponding to the text in the destination language with the timbre of the original audio. According to some implementations of the present disclosure, the text-to-speech network 520 may be trained separately. Alternatively and/or in addition, the text-to-speech network 520 may be trained together with the speech-to-text network 510 using different reference samples. In this way, the machine learning model 220 may acquire various knowledge about performing speech translation, thereby improving the performance of the machine learning model 220.

It would be appreciated that although the translation process is described above using only an example in which Chinese is the source language and English is the destination language, alternatively and/or in addition, the source language and the destination language may include other natural languages, for example, Japanese, French, German, Spanish, and so on. For the sake of discussion, the audio format is used only as an example of the speech data to be translated, and alternatively and/or in addition, the speech data may be represented in the audio format or the video format.

With the implementations of the present disclosure, the machine learning model 220 may accurately distinguish different speech segments with different timbres represented in the source language and generate speech translations with different timbres represented in the destination language respectively. Furthermore, the end-to-end machine learning model 220 may determine the speech translation more efficiently. Therefore, the listener may distinguish speakers corresponding to different speech translations in a clearer manner, thereby improving the efficiency of language communication.

### Example Process

Fig. 7 illustrates a flowchart of a method 700 of translating speech data according to some implementations of the present disclosure. At block 710, source speech data represented in a source language is received, the source speech data including a first speech segment having a first timbre and a second speech segment having a second timbre. At block 720, a speech translation corresponding to the source speech data is determined using a machine learning model, the speech translation being represented in a destination language, and the speech translation including a first speech translation corresponding to the first speech segment and a second speech translation corresponding to the second speech segment, the first speech translation having the first timbre, and the second speech translation having the second timbre.

According to some implementations of the present disclosure, the source speech data is part of a source speech data sequence, and determining the speech translation corresponding to the source speech data includes: determining preceding text data corresponding to preceding speech data in the source speech data sequence, the preceding speech data preceding the source speech data; obtaining a preceding text translation corresponding to the preceding text data; and determining the speech translation corresponding to the source speech data using the machine learning model based on the preceding text data and the preceding text translation.

According to some implementations of the present disclosure, determining the speech translation corresponding to the source speech data based on the preceding text data and the preceding text translation includes: determining, using the machine learning model, a first text translation corresponding to the first speech segment and a second text translation corresponding to the second speech segment respectively based on the preceding text data and the preceding text translation; determining, using the machine learning model, a first speech translation corresponding to the first text translation and a second speech translation corresponding to the second text translation, respectively; and combining the first speech translation and the second speech translation using the machine learning model to determine the speech translation.

According to some implementations of the present disclosure, determining the first text translation and the second text translation respectively based on the preceding text data and the preceding text translation includes: determining, using the machine learning model, a text translation corresponding to the source speech data; and dividing the text translation into the first text translation and the second text translation based on a switching token in the text translation, the switching token corresponding to a switching point between a first reference speech segment and a second reference speech segment.

According to some implementations of the present disclosure, receiving the source speech data includes: extracting a speech data block from a source speech data sequence according to a predetermined duration; and determining the source speech data from the speech data block.

According to some implementations of the present disclosure, the preceding speech data and the source speech data are located in the speech data block.

According to some implementations of the present disclosure, the machine learning model includes a translation model, the translation model being configured to translate the source speech data represented in the source language into a text translation represented in the destination language, the text translation including a plurality of text translations corresponding to a plurality of speech segments in the source speech data respectively and a switching token corresponding to a switching point between the a plurality of speech segments.

According to some implementations of the present disclosure, the translation model is determined based on: obtaining reference preceding text data represented in the source language and a reference preceding text translation, the reference preceding text data being represented in the source language, and the reference preceding text translation being represented in the destination language; obtaining reference source speech data represented in the source language, the reference source speech data including a first reference speech segment having the first timbre and a second reference speech segment having the second timbre; obtaining a first reference text translation corresponding to the first reference speech segment and a second reference text translation corresponding to the second reference speech segment; and updating the translation model based on the reference preceding text data, the reference preceding text translation, reference source speech data, the first reference text translation, and the second reference text translation.

According to some implementations of the present disclosure, the first reference text translation includes a reference switching token corresponding to the switching point between the first reference speech segment and the second reference speech segment.

According to some implementations of the present disclosure, the source speech data is received in a streaming manner.

### Example Apparatus and Device

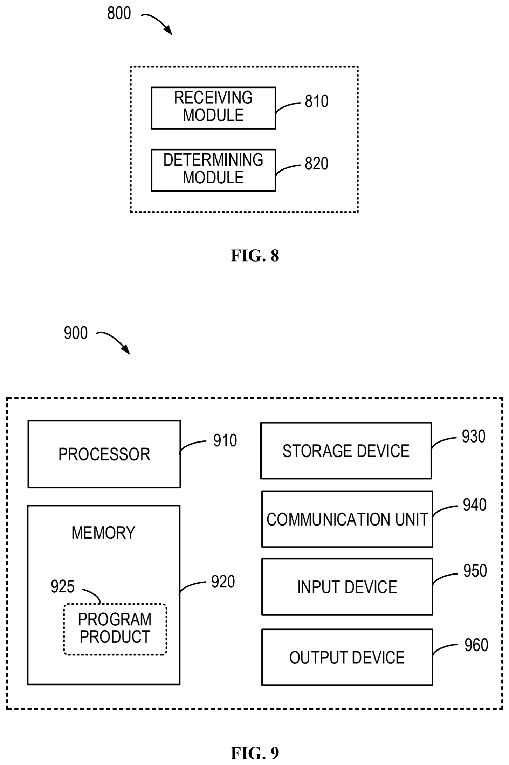

Fig. 8 illustrates a block diagram of an apparatus 800 for translating speech data according to some implementations of the present disclosure. The apparatus 800 includes a receiving module 810 and a determining module 820. The receiving module 810 is configured to receive source speech data represented in a source language, the source speech data including a first speech segment having a first timbre and a second speech segment having a second timbre; and the determining module 820 is configured to determine a speech translation corresponding to the source speech data using a machine learning model, the speech translation being represented in a destination language, and the speech translation including a first speech translation corresponding to the first speech segment and a second speech translation corresponding to the second speech segment, the first speech translation having the first timbre, and the second speech translation having the second timbre.

According to some implementations of the present disclosure, the source speech data is part of a source speech data sequence, and the determining module is further configured to: determine preceding text data corresponding to preceding speech data in the source speech data sequence, the preceding speech data preceding the source speech data; obtain a preceding text translation corresponding to the preceding text data; and determine the speech translation corresponding to the source speech data using the machine learning model based on the preceding text data and the preceding text translation.

According to some implementations of the present disclosure, the determining module 820 is further configured to: determine, using the machine learning model, a first text translation corresponding to the first speech segment and a second text translation corresponding to the second speech segment respectively based on the preceding text data and the preceding text translation; determine, using the machine learning model, a first speech translation corresponding to the first text translation and a second speech translation corresponding to the second text translation, respectively; and combine the first speech translation and the second speech translation using the machine learning model to determine the speech translation.

According to some implementations of the present disclosure, the determining module 820 is further configured to: determine, using the machine learning model, a text translation corresponding to the source speech data; and divide the text translation into the first text translation and the second text translation based on a switching token in the text translation, the switching token corresponding to a switching point between a first reference speech segment and a second reference speech segment.

According to some implementations of the present disclosure, the receiving module 810 is further configured to: extract a speech data block from a source speech data sequence according to a predetermined duration; and determine the source speech data from the speech data block.

According to some implementations of the present disclosure, the preceding speech data and the source speech data are located in the speech data block.

According to some implementations of the present disclosure, the machine learning model includes a translation model, the translation model being configured to translate the source speech data represented in the source language into a text translation represented in the destination language, the text translation including a plurality of text translations corresponding to a plurality of speech segments in the source speech data respectively and a switching token corresponding to a switching point between the plurality of speech segments.

According to some implementations of the present disclosure, the translation model is determined based on: obtaining reference preceding text data represented in the source language and a reference preceding text translation, the reference preceding text data being represented in the source language, and the reference preceding text translation being represented in the destination language; obtaining reference source speech data represented in the source language, the reference source speech data including a first reference speech segment having the first timbre and a second reference speech segment having the second timbre; obtaining a first reference text translation corresponding to the first reference speech segment and a second reference text translation corresponding to the second reference speech segment; and updating the translation model based on the reference preceding text data, the reference preceding text translation, reference source speech data, the first reference text translation, and the second reference text translation.

According to some implementations of the present disclosure, the first reference text translation includes a reference switching token corresponding to the switching point between the first reference speech segment and the second reference speech segment.

According to some implementations of the present disclosure, the source speech data is received in a streaming manner.

Fig. 9 illustrates a block diagram of a device 900 in accordance with some implementations of the present disclosure. It would be appreciated that the computing device 900 shown in Fig. 9 is merely illustrative and should not be construed as any limitation on the functionality and scope of the implementations described herein. The computing device 900 shown in Fig. 9 may be used to implement the method described above.

As shown in Fig. 9, the computing device 900 is in the form of a general-purpose computing device. Components of the computing device 900 may include, but are not limited to, one or more processors 910, a memory 920, a storage device 930, one or more communication units 940, one or more input devices 950, and one or more output devices 960. The processor 910 may be a physical or virtual processor and may perform various processes based on the programs stored in the memory 920. In a multi-processor system, multiple processors perform computer executable instructions in parallel to improve the parallel processing capability of the computing device 900.

The computing device 900 typically includes multiple computer storage medium. Such medium may be any available medium that is accessible to the computing device 900, including, but not limited to, volatile and non-volatile medium, removable and non-removable medium. The memory 920 may be volatile memory (for example, a register, cache, Random Access Memory (RAM)), non-volatile memory (such as a Read-Only Memory (ROM), Electrically Erasable Programmable Read-Only Memory (EEPROM), flash memory), or any combination thereof. The storage device 930 may be removable or non-removable medium and may include a machine-readable medium such as a flash drive, disk, or any other medium, which may be used to store information and/or data (such as training data for training) and may be accessed within the computing device 900.

The computing device 900 may further include additional removable/non-removable, volatile/non-volatile storage medium. Although not shown in Fig. 9, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 920 may include a computer program product 925 having one or more program modules configured to perform various methods or acts of various implementations of the present disclosure.

The communication unit 940 implements communication with other computing devices through the communication medium. In addition, the functions of the components of the computing device 900 may be implemented with a single computing cluster or multiple computing machines, which may communicate through communication connections. Therefore, the computing device 900 may use a logical connection with one or more other servers, a network personal computer (PC), or another network node to operate in a networked environment.

The input device 950 may be one or more input devices, such as a mouse, keyboard, tracking ball, etc. The output device 960 may be one or more output devices, such as a display, loudspeaker, printer, etc. The computing device 900 may further communicate with one or more external devices (not shown) such as a storage device, a display device, etc., with one or more devices that enable a user to interact with the computing device 900, or with any devices (e.g., a network card, a modem, etc.) that enable the computing device 900 to communicate with one or more other computing devices via the communication unit 940, as needed. Such communication may be performed via input/output (I/O) interfaces (not shown).

According to an implementation of the present disclosure, there is provided a computer-readable storage medium having computer-executable instructions stored thereon, where the computer-executable instructions are executed by a processor to implement the method described above. According to an implementation of the present disclosure, there is further provided a computer program product tangibly stored on a non-transitory computer-readable medium and including computer-executable instructions, which are executed by a processor to implement the method described above. According to an implementation of the present disclosure, there is provided a computer program product having a computer program stored thereon, where the program, when executed by a processor, implements the method described above.

Various aspects of the present disclosure are described herein with reference to flowcharts and/or block diagrams of methods, apparatuses, devices and computer program products implemented in accordance with the present disclosure. It would be appreciated that each block of the flowcharts and/or block diagrams, and combinations of blocks in the flowcharts and/or block diagrams, may be implemented by computer-readable program instructions.

These computer-readable program instructions may be provided to a processor of a general-purpose computer, special-purpose computer, or other programmable data processing apparatus to produce a machine, such that the instructions, when executed by the processor of the computer or other programmable data processing apparatus, produce an apparatus for implementing the functions/acts specified in one or more blocks of the flowcharts and/or block diagrams. These computer-readable program instructions may also be stored in a computer-readable storage medium, which instructions cause a computer, programmable data processing apparatus, and/or other devices to work in a particular manner, so that the computer-readable medium having the instructions stored therein includes an article of manufacture including instructions for implementing various aspects of the functions/acts specified in one or more blocks of the flowcharts and/or block diagrams.

The computer-readable program instructions may be loaded onto a computer, other programmable data processing apparatus, or other device, causing a series of operational steps to be performed on the computer, other programmable data processing apparatus, or other device to produce a computer-implemented process, such that the instructions executed on the computer, other programmable data processing apparatus, or other device implement the functions/acts specified in one or more blocks of the flowcharts and/or block diagrams.

The flowcharts and block diagrams in the drawings show the possibly implemented architectures, functionality, and operations of the systems, methods and computer program products according to multiple implementations of the present disclosure. In this regard, each block in the flowchart or block diagrams may represent a module, program segment, or portion of instruction, which includes one or more executable instructions for implementing the specified logical function(s). In some alternative implementations, the functions noted in the block may occur in an order different from that noted in the drawings. For example, two blocks shown in succession may, in fact, be executed substantially concurrently, or the blocks may sometimes be executed in a reverse order, depending upon the functionality involved. It would also be noted that each block of the block diagrams and/or flowchart, and combinations of the blocks in the block diagrams and/or flowchart, may be implemented in special purpose hardware-based systems that perform the specified functions or acts, or combinations of special purpose hardware and computer instructions.

The implementations of the present disclosure have been described above, the foregoing description being illustrative, not exhaustive, and not limited to the disclosed implementations. Many modifications and variations will be apparent to those of ordinary skill in the art without departing from the scope and spirit of the described implementations. The choice of terms used herein is intended to best explain the principles of the implementations, the practical applications or improvements to the technologies in the market, or to enable other persons of ordinary skill in the art to understand the implementations disclosed herein.

## Claims

1. A method (700) of translating speech data, comprising:
receiving (710) source speech data represented in a source language, the source speech data comprising a first speech segment having a first timbre and a second speech segment having a second timbre; and
determining (720) a speech translation corresponding to the source speech data using a machine learning model, the speech translation being represented in a destination language and comprising a first speech translation corresponding to the first speech segment and a second speech translation corresponding to the second speech segment, the first speech translation having the first timbre, and the second speech translation having the second timbre.

2. The method (700) of claim 1, wherein the source speech data is part of a source speech data sequence, and determining the speech translation corresponding to the source speech data comprises:
determining preceding text data corresponding to preceding speech data in the source speech data sequence, the preceding speech data preceding the source speech data;
obtaining a preceding text translation corresponding to the preceding text data; and
determining the speech translation corresponding to the source speech data using the machine learning model based on the preceding text data and the preceding text translation.

3. The method (700) of claim 2, wherein determining the speech translation corresponding to the source speech data based on the preceding text data and the preceding text translation comprises:
determining, using the machine learning model, a first text translation corresponding to the first speech segment and a second text translation corresponding to the second speech segment respectively based on the preceding text data and the preceding text translation;
determining, using the machine learning model, a first speech translation corresponding to the first text translation and a second speech translation corresponding to the second text translation, respectively; and
combining the first speech translation and the second speech translation using the machine learning model to determine the speech translation.

4. The method (700) of claim 3, wherein determining the first text translation and the second text translation respectively based on the preceding text data and the preceding text translation comprises:
determining, using the machine learning model, a text translation corresponding to the source speech data; and
dividing the text translation into the first text translation and the second text translation based on a switching token in the text translation, the switching token corresponding to a switching point between the first reference speech segment and the second reference speech segment.

5. The method (700) of claim 2, wherein receiving the source speech data comprises:
extracting a speech data block from the source speech data sequence according to a predetermined duration; and
determining the source speech data from the speech data block.

6. The method (700) of claim 5, wherein the preceding speech data and the source speech data are located in the speech data block.

7. The method (700) of claim 1, wherein the machine learning model comprises a translation model, the translation model being configured to translate the source speech data represented in the source language into a text translation represented in the destination language, the text translation comprising a plurality of text translations corresponding to a plurality of speech segments in the source speech data respectively and a switching token corresponding to a switching point between the plurality of speech segments.

8. The method (700) of claim 7, wherein the translation model is determined based on:
obtaining reference preceding text data represented in the source language and a reference preceding text translation, the reference preceding text data being represented in the source language, and the reference preceding text translation being represented in the destination language;
obtaining reference source speech data represented in the source language, the reference source speech data comprising a first reference speech segment having the first timbre and a second reference speech segment having the second timbre;
obtaining a first reference text translation corresponding to the first reference speech segment and a second reference text translation corresponding to the second reference speech segment; and
updating the translation model based on the reference preceding text data, the reference preceding text translation, the reference source speech data, the first reference text translation, and the second reference text translation.

9. The method (700) of claim 8, wherein the first reference text translation comprises a reference switching token corresponding to the switching point between the first reference speech segment and the second reference speech segment.

10. The method (700) of claim 1, wherein the source speech data is received in a streaming manner.

11. An apparatus (800) for translating speech data, comprising:
a receiving module (810) configured to receive source speech data represented in a source language, the source speech data comprising a first speech segment having a first timbre and a second speech segment having a second timbre; and
a determining module (820) configured to determine a speech translation corresponding to the source speech data using a machine learning model, the speech translation being represented in a destination language and comprising a first speech translation corresponding to the first speech segment and a second speech translation corresponding to the second speech segment, the first speech translation having the first timbre, and the second speech translation having the second timbre.

12. An electronic device (900), comprising:
at least one processor (910); and
at least one memory (920) coupled to the at least one processor (910) and storing instructions (925) executable by the at least one processor (910), the instructions, when executed by the at least one processor (910), causing the electronic device to perform the method (700) of any of claims 1 to 10.

13. A computer-readable storage medium having computer instructions (925) stored thereon, the computer instructions (925), when executed by a processor (910), causing the processor (910) to implement the method (700) of any of claims 1 to 10.

14. A computer instruction product comprising computer instructions (925) which, when executed by a processor (910), implements the method (700) of any of claims 1 to 10.
